(19) Europäisches Patentamt
European Patent Office
Office européen des brevets

(11) **EP 3 899 578 B1**

(12) **EUROPÄISCHE PATENTSCHRIFT**

(45) Veröffentlichungstag und Bekanntmachung des Hinweises auf die Patenterteilung:
**16.08.2023  Patentblatt 2023/33**

(21) Anmeldenummer: **19801270.0**

(22) Anmeldetag: **06.11.2019**

(51) Internationale Patentklassifikation (IPC):
**G01S 7/527** *(2006.01)*  **G01S 15/931** *(2020.01)*
**G01S 7/292** *(2006.01)*  **G01S 13/931** *(2020.01)*

(52) Gemeinsame Patentklassifikation (CPC):
**G01S 15/931; G01S 7/527;** G01S 7/2926;
G01S 2013/9324

(86) Internationale Anmeldenummer:
**PCT/EP2019/080355**

(87) Internationale Veröffentlichungsnummer:
**WO 2020/126195 (25.06.2020 Gazette 2020/26)**

(54) **NICHTLINEARES EMPFANGSFILTER FÜR EINEN OBJEKTERKENNUNGSSENSOR FÜR FAHRZEUGE, INSBESONDERE ULTRASCHALLSENSOR**

NON-LINEAR RECEPTION FILTER FOR AN OBJECT RECOGNITION SENSOR FOR VEHICLES, IN PARTICULAR ULTRASOUND SENSOR

FILTRE DE RÉCEPTION NON LINÉAIRE POUR UN CAPTEUR D'IDENTIFICATION D'OBJETS POUR DES VÉHICULES, EN PARTICULIER CAPTEUR À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2018  DE 102018222320**

(43) Veröffentlichungstag der Anmeldung:
**27.10.2021  Patentblatt 2021/43**

(73) Patentinhaber: **Robert Bosch GmbH**
**70442 Stuttgart (DE)**

(72) Erfinder:
• **BAUER, Ulrich**
**71706 Markgroeningen (DE)**
• **SIEBER, Udo**
**74321 Bietigheim (DE)**

(56) Entgegenhaltungen:
**DE-A1-102008 041 894    DE-A1-102013 200 434**

**Beschreibung**

Die Erfindung betrifft eine Objekterkennungsvorrichtung für Fahrzeuge. Des Weiteren betrifft die Erfindung ein Verfahren zur Erkennung eines Objektes für Fahrzeuge.

Stand der Technik

Fahrerassistenzfunktionen basierend auf Ultraschallsensoren sind seit langem bekannt. Eine wesentliche Funktion eines Ultraschallsensors ist die Detektion von Objekten. In einem typischen Anwendungsszenario wird zunächst vom Ultraschallsensor ein Ultraschallsignal ausgesendet. Nach kurzer Zeit wird durch den Ultraschallsensor ein von einem Objekt reflektierendes Signal, also ein Echo, wieder empfangen. Dabei wird ausgewertet, ob das Empfangssignal eine vorgegebene Schwellwertkurve überschreitet, welches auf ein im Nahbereich des betreffenden Fahrzeugs befindliches Objekt hinweist.

Ein solcher Ultraschallsensor kann im Wesentlichen aus einem elektroakustischen Schallwandler sowie einer Ansteuer- und Auswerteschaltung bestehen. Im Betrieb wird der Schallwandler über seine zugeordnete Beschaltung mit einem definierten frequenzmodulierten Signal (Frequenz Sweep) zu Schwingungen angeregt. Das reflektierte Ultraschallsignal wird beim Wandler wieder empfangen und von analogen Daten zu digitalen Daten gewandelt. Weiterhin können ein Downsamplings-Verfahren und ein Filterungsverfahren mittels eines Matched-Filters erfolgen. Das gefilterte digitale Signal wird dann als Eingangssignal für die Berechnung einer adaptiven Schwelle verwendet, welche als Basis für eine Echodetektion zum Einsatz kommt.

Eine adaptive Schwelle ist im Wesentlichen die Mittelung des Empfangssignals über eine gewisse Fensterlänge und die Multiplikation mit einem Sensitivitätsparameter. Die Berechnung der adaptiven Schwelle kann basierend auf dem Empfangssignal mittels eines Constant False Alarm Rate Algorithmus (CFAR) oder ähnlicher Algorithmen erfolgen.

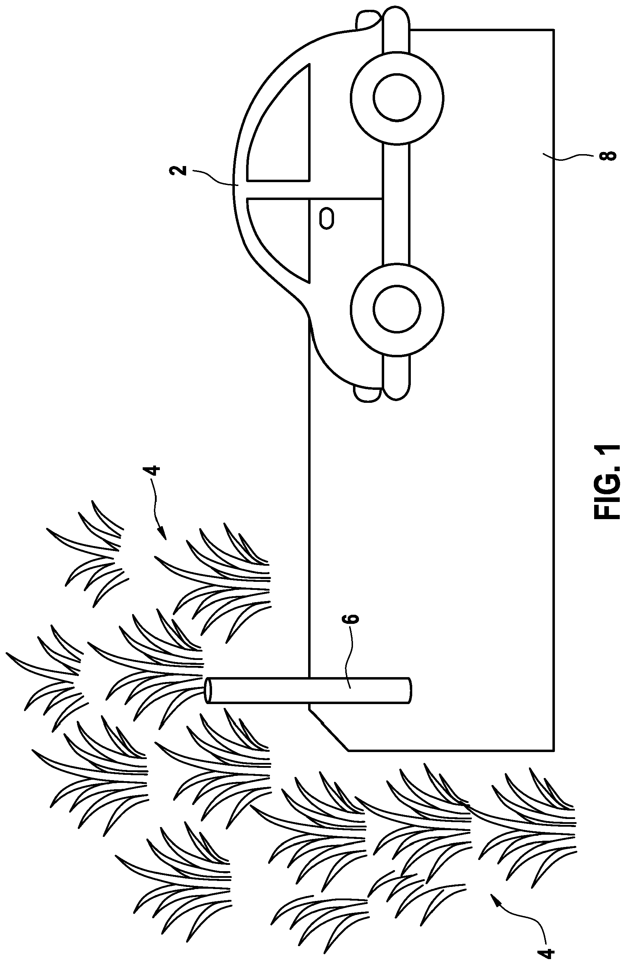

Mit der adaptiven Schwelle von Ultraschallsensoren kann es aber in der Nähe von stark reflektierenden Objekten zu Sensitivitätsverlusten von hohen Amplitudenwerten kommen. Als Beispiel wird auf das in Fig. 1 dargestellte Szenario verwiesen.

In dem Szenario besteht die Schwierigkeit darin, das Gebüsch 4, welches sich ca. 30-40 cm hinter dem Pfosten 6 befindet, mit hoher Sensitivität zu detektieren, obwohl es sich bei dem Busch um ein Gebilde mit vielen Schall-Reflektionen handelt. Diese sind in großem Abstand schwer von Geräuschen zu unterscheiden.

Die EP 2 322 952 A3 beschreibt ein Verfahren zum Detektieren eines Objektes mittels eines nach dem Echolaufzeitprinzip arbeitenden Sensors einer Fahrerassistenzeinrichtung. Es wird ein Sendesignal mit vorgegebener Amplitude zu einem Sendezeitpunkt durch den Sensor gesendet. Ein Empfangssignal wird durch den Sensor zu einem späteren Empfangszeitpunkt empfangen. Es erfolgt eine Auswertung des Empfangssignals im Hinblick auf ein Erkennen eines Überschreitens einer vordefinierten unteren Schwelle. Das Empfangssignal wird dahingehend ausgewertet, ob seine Amplitude unterhalb einer von der Amplitude des Sendesignals abhängigen oberen Schwelle liegt, wobei das Empfangssignal als das von dem Objekt reflektierte Sendesignal zum Detektieren des Objekts dann erkannt wird, wenn die Amplitude des Empfangssignals zwischen den beiden Schwellen liegt.

Die DE 10 2013 200434 A1 und die DE 10 2008 041894 A1 offenbaren zudem jeweils einen Ultraschallsensor mit einem nichtlinearen adaptiven Empfangsfilter.

Offenbarung der Erfindung

Die vorliegende Erfindung schafft eine Objekterkennungsvorrichtung für Fahrzeuge nach Anspruch 1 und ein Verfahren zur Erkennung eines Objektes für Fahrzeuge nach Anspruch 7.

Bevorzugte Weiterbildungen sind Gegenstand der Unteransprüche.

Vorteile der Erfindung

Die vorliegende Erfindung schafft eine Objekterkennungsvorrichtung für Fahrzeuge, die eine adaptive nichtlineare Filterstruktur aufweist. Durch den Einsatz einer variablen Zeitkonstante bei einem gewöhnlichen linearen Tiefpassfilter ergibt sich das erfindungsgemäße nichtlineare Filter. Bei der Bestimmung der variablen Zeitkonstante werden erfindungsgemäß die Differenz der gefilterten Signale und der erfassten Signale sowie der gemittelte Amplitudenverlauf der erfassten Signale berücksichtigt.

Mit der erfindungsgemäßen Objekterkennungsvorrichtung sind für ein Fahrzeug verschiedene Objekte, die sich im Nahbereich des Fahrzeugs befinden und sehr nahe beieinander liegen, voneinander zu unterscheiden.

Außerdem wird eine erhöhte Sensitivität für Signale realisiert, die von einem multi-reflektierenden Objekt, wie z.B. der in Fig. 1 dargestellte Busch, reflektiert werden. Damit ist erfindungsgemäß eine bessere Trennung zwischen Nutzsignal, also das von einem multi-reflektierenden Objekt reflektierte Signal, und Rauschsignal möglich.

Da erfindungsgemäß eine bessere Trennungsschärfe zwischen Nutzsignal und Rauschsignal erreicht wird, können kostengünstigere Sensoren für die Objekterkennung zum Einsatz kommen, ohne zur Erhöhung der Sensitivität der Sensoren relativ teure Sensorkomponenten einsetzen zu müssen.

Trotz hinreichend guter Eliminierung der Geräusche ist darüber hinaus erfindungsgemäß für ein erkanntes Nutzsignal die Signalverzögerung der Amplitudenwerte gering. Damit ist die Positionsgenauigkeit der erkannten Objekte beträchtlich hoch.

Die vorliegende Erfindung schafft zudem ein Verfahren zur Erkennung eines Objektes für Fahrzeuge mit den oben beschriebenen Vorteilen.

In einer bevorzugten Ausführungsform der erfindungsgemäßen Objekterkennungsvorrichtung ist es vorgesehen, dass mit der quadratischen Abweichung zwischen den gefilterten Signalen und den erfassten Signalen, einer vorgegebenen minimalen Zeitkonstante, einer vorgegebenen maximalen Zeitkonstante, einer vorgegebenen Toleranzbreite und einer Steigung, die den Übergang zwischen der vorgegebenen minimalen Zeitkonstante und der vorgegebenen maximalen Zeitkonstante bestimmt, die variable Zeitkonstante festlegbar ist.

Die variable Zeitkonstante wird erfindungsgemäß nach folgender Gleichung berechnet bzw. festgelegt und ist durch eine nichtlineare Kennlinie dargestellt:

$$T_{Filter} = \frac{1 + s \cdot (e^2 - a)}{\frac{1}{T_{min}} \cdot \left(1 + s \cdot (e^2 - a)\right) - \frac{1}{T_{min}} + \frac{1}{T_{max}}}$$

Demnach besteht das Symbol $T_{Filter}$ für die festzulegende variable Zeitkonstante. Die Parameter $s$, $a$, $T_{min}$, $T_{max}$ und $e^2$ in der Gleichung stehen jeweils für das Folgende:

  $s$: Steigung der nichtlinearen Kennlinie, welche Steigung den Übergang zwischen $T_{max}$ und $T_{min}$ bestimmt,
  $a$: Toleranzbreite bzw. Toleranzbereich der nichtlinearen Kennlinie,
  $T_{min}$: Minimale Zeitkonstante der nichtlinearen Kennlinie,
  $T_{max}$: Maximale Zeitkonstante der nichtlinearen Kennlinie, und
  $e^2$: Quadratische Abweichung zwischen den gefilterten Signalen und den erfassten Signalen.

In einer weiteren bevorzugten Ausführungsform ist es vorgesehen, dass die Steigung proportional dem Kehrwert des Quadrats des im gemittelten Amplitudenverlauf vorgesehenen Amplitudenwerts entspricht. Damit kann die Steigung auf den gemittelten Amplitudenverlauf zur Laufzeit reagieren und die nichtlineare Kennlinie adaptiv mitgeführt werden.

Dies führt dazu, dass je kleiner der gemittelte Amplitudenwert ausfällt, desto sensitiver der erfindungsgemäße nichtlineare Filter auf Amplitudenänderungen

$$s_{adapt} = \frac{k}{A_{filt}^2}$$

reagieren kann. Die Steigung in dieser Ausführungsform kann als Symbol $s_{adapt}$ bezeichnet und nach folgender Gleichung berechnet werden:

Die Symbole und $k$ stehen jeweils für das Quadrat der gemittelten Amplitudenwerte und einen Proportionalitätsfaktor.

In einer weit $A_{filt}^2$ bevorzugten Ausführungsform ist es vorgesehen, dass die variable Zeitkonstante als die vorgegebene maximale Zeitkonstante festlegbar ist, wenn sich die quadratische Abweichung zwischen den gefilterten Signalen und den erfassten Signalen innerhalb der vorgegebenen Toleranzbreite befindet. Damit wird die Zeitkonstante möglichst groß gewählt, um eine größtmögliche Filterwirkung zu erzielen.

In einer weiteren bevorzugten Ausführungsform ist es vorgesehen, dass die Mittelungseinheit ein Tiefpassfilter, eine Einheit zur Implementierung der Methode des gleitenden Mittelwerts oder eine Einheit zur Implementierung der Methode der adaptiven Schwelle ist. Andere alternative Einheiten, die einen Wert proportional zum gemittelten Amplitudenverlauf generieren können, können auch eingesetzt werden.

In einer weiteren bevorzugten Ausführungsform ist es vorgesehen, dass die Filtereinheit eine Berechungskomponente aufweist, die so eingerichtet ist, die variable Zeitkonstante zu berechnen, dass die Filtereinheit ein Rückführelement aufweist, das so eingerichtet ist, zur Festlegung der variablen Zeitkonstante die gefilterten Signale mit einer Zeitverzögerung zur Berechungskomponente zurückzuführen, und dass die Filtereinheit ein Übertragungselement aufweist, das so eingerichtet ist, zur Festlegung der variablen Zeitkonstante den gemittelten Amplitudenverlauf zur Berechungskomponente zu übertragen.

Dadurch lässt das erfindungsgemäße nichtlineare Filter Signale mit hoher Dynamik und großen Amplituden nahezu ungefiltert passieren, während Signale mit geringerer Dynamik und geringeren Amplituden stärker gefiltert werden. Außerdem ist eine adaptive Anpassung der nichtlinearen Kennlinie an den gemittelten Amplitudenverlauf möglich.

In einer weiteren bevorzugten Ausführungsform ist es vorgesehen, dass mit dem Sensor die Signale aus dem Objekt, das vom Sensor 0,1 bis 20 m entfernt, insbesondere 1 bis 6 m entfernt, ist, erfassbar sind.

In einer weiteren bevorzugten Ausführungsform ist es vorgesehen, dass zur Bestimmung der Art und Beschaffenheit des Objektes mit einem weiteren Sensor optische Signale erfassbar sind. Durch eine Datenfusion mit Ultraschallsignalen kann zugleich die exakte Entfernung der Objekte im Umfeld eines Fahrzeugs, die Art sowie Beschaffenheit der Objekte erkannt werden.

In einer bevorzugten Ausführungsform des erfindungsgemäßen Verfahrens ist es vorgesehen, dass der Wertverlauf entsprechend der Differenz des gemittelten Amplitudenverlaufs und der gefilterten Signale derart verarbeitet wird, dass die negativen Differenzwerte vernachlässigt werden. Dadurch sind nach der Verarbeitung im Wertverlauf lediglich die für die Erkennung des Objektes relevanten positiven Differenzen dargestellt.

Kurze Beschreibung der Zeichnungen

Die vorliegende Erfindung wird nachfolgend anhand der in den schematischen Figuren angegebenen Ausführungsbeispiele näher erläutert. Es zeigen:

Fig. 1    eine schematische Darstellung eines Anwendungsszenarios der erfindungsgemäßen Objekterkennungsvorrichtung und/oder des erfindungsgemäßen Verfahrens;

Fig. 2    ein mit einem Blockdiagramm schematisch dargestelltes Filtergerät einer Ausführungsform der erfindungsgemäßen Objekterkennungsvorrichtung; und

Fig. 3    eine schematische Darstellung von zwei Diagrammen, wobei im oberen Diagramm der gemittelte Amplitudenverlauf der vom Sensor erfassten Signale dargestellt ist, und wobei im unteren Diagramm der Amplitudenverlauf des Ausgangssignals des Filtergeräts der Ausführungsform der erfindungsgemäßen Objekterkennungsvorrichtung gemäß Fig. 2 dargestellt ist.

Ausführungsformen der Erfindung

In den Figuren bezeichnen gleiche Bezugszeichen gleiche bzw. funktionsgleiche Elemente.

Fig. 1 ist eine schematische Darstellung eines Anwendungsszenarios der erfindungsgemäßen Objekterkennungsvorrichtung und/oder des erfindungsgemäßen Verfahrens.

Ein Fahrzeug 2 fährt zum Einparken in einen Parkplatz 8 ein. Etwa 3 m vor dem Fahrzeug 2 steht ein Pfosten 6, und ca. 40 cm hinter dem Pfosten 6 befindet sich ein Gebüsch 4.

Mit einem Ultraschallsensor aus dem Stand der Technik kann der Pfosten 6 in der Regel unproblematisch erkannt werden. Allerdings könnte damit das Gebüsch 4 nicht detektiert werden. Denn das Gebüsch verursacht gleichzeitig eine Vielzahl von Schall-Reflektionen, die mit einem solchen Ultraschallsensor nicht von Umgebungsgeräuschen zu unterscheiden sind, wenn der Abstand zwischen dem Fahrzeug 2 und dem Gebüsch 4 noch relativ groß ist.

Im Gegensatz dazu können mit der erfindungsgemäßen Objekterkennungsvorrichtung bzw. dem erfindungsgemäßen Verfahren sowohl der Pfosten 6 als auch das Gebüsch 4 schnell erkannt werden.

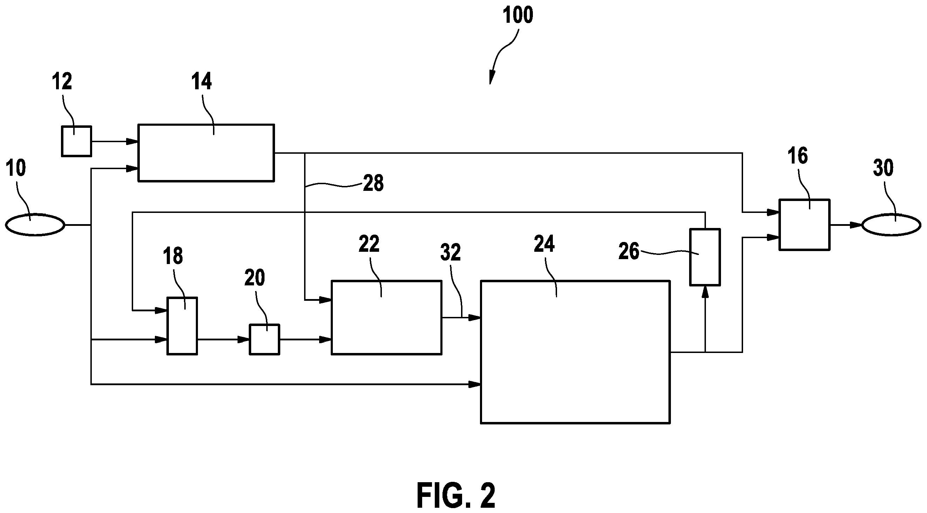

Fig. 2 zeigt ein mit einem Blockdiagramm schematisch dargestelltes Filtergerät einer Ausführungsform der erfindungsgemäßen Objekterkennungsvorrichtung.

Das in Fig. 2 mit einem Blockdiagramm schematisch dargestellte Filtergerät 100 weist einen Filtereingang 10 und einen Filterausgang 30 auf. Die vom Sensor der erfindungsgemäßen Objekterkennungsvorrichtung erfassten Signale aus mindestens einer Ultraschalldetektionssequenz werden dem Filtereingang 10 zugeführt. Die durch das Filtergerät 100 gefilterten Signale werden dem Analysegerät zugeführt.

Das Filtergerät 100 weist zudem eine Mittelungseinheit 14 auf, die den Verlauf der Amplituden der erfassten Signale mittelt. Gemäß der in Fig. 2 dargestellten Ausführungsform ist die Mittelungseinheit 14 ein Tiefpassfilter, das eine unveränderliche Zeitkonstante 12 aufweist.

Das Filtergerät 100 weist außerdem eine nichtlineare Filtereinheit 24 auf, die basierend auf einem linearen Tiefpassfilter mit einer variablen Zeitkonstante 32 vorgesehen ist und die erfassten Signale filtert.

Die durch die nichtlineare Filtereinheit 24 gefilterten Signale werden zur Differenzierung mit dem gemittelten Amplitudenverlauf der erfassten Signale zur Komponente 16 geführt. Diese gefilterten Signale werden zudem durch ein

Rückführelement 26 mit einer Zeitverzögerung zur Abweichungsberechnungskomponente 18 zurückführt, bei der die Abweichung dieser gefilterten Signale und der erfassten Signale berechnet wird.

Das Ergebnis aus der Abweichungsberechnungskomponente 18 wird bei der Komponente 20 quadriert und der Berechungskomponente 22 zugeführt, die erfindungsgemäße variable Zeitkonstante berechnet.

Zur Berechnung bzw. Festlegung der variablen Zeitkonstante wird des Weiteren durch ein Übertragungselement 28 der gemittelte Amplitudenverlauf der erfassten Signale zu der Berechungskomponente 22 geführt.

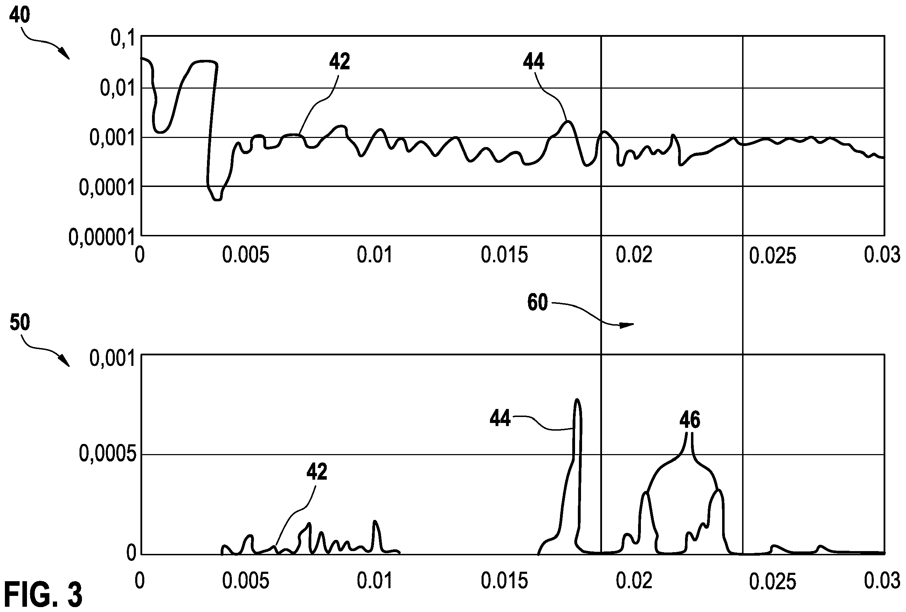

Fig. 3 ist eine schematische Darstellung von zwei Diagrammen 40, 50. Im oberen Diagramm 40 ist der gemittelte Amplitudenverlauf der vom Sensor erfassten Signale dargestellt, welcher sich aus z.B. der adaptiven Schwelle aus dem Stand der Technik ergibt. Im unteren Diagramm ist der Amplitudenverlauf des Ausgangssignals des Filtergeräts der Ausführungsform der erfindungsgemäßen Objekterkennungsvorrichtung gemäß Fig. 2 dargestellt.

Die Abszissen in den beiden Diagrammen sind die Zeit in Sekunden, und die entsprechenden Ordinaten sind die Amplitude in dBA. Bei dem oberen Diagramm ist der Nullpunkt der Ordinate höhenversetzt.

Wie aus Fig. 3 ersichtlich ist, treten in den beiden Diagrammen zwischen ca. 5 ms und 10 ms Echos 42 auf, die wegen der unebenen Bodenbeschaffenheit bei dem Parkplatz 8 verursacht werden. Ein starker Ausschlag 44 kommt bei ca. 18 ms durch den reflektierenden Pfosten 6 zustande.

Etwa 2,5 ms später wird dieses starke Echo 44 von weiteren Echos 46 gefolgt, die auf das Gebüsch 4 zurückzuführen sind (siehe das Zeitfenster 60). Dies ist nicht im oberen Diagramm 40 entsprechend dem Stand der Technik erkennbar, sondern im unteren Diagramm 50 entsprechend der erfindungsgemäßen Objekterkennungsvorrichtung.

## Patentansprüche

1. Objekterkennungsvorrichtung für Fahrzeuge (2), mit mindestens einem als Ultraschallsensor ausgestalteten Sensor, einem Filtergerät (100), wobei der Sensor und das Filtergerät (100) in einem gemeinsamen Gehäuse angeordnet sein können, und einem Analysegerät, wobei der Sensor dazu eingerichtet ist, Signale aus mindestens einer Ultraschalldetektionssequenz von einem zu erkennenden Objekt (4, 6) zu erfassen, wobei das Filtergerät (100) dazu eingerichtet ist, die erfassten Signale zu filtern und dann dem Analysegerät zuzuführen, und wobei das Analysegerät eingerichtet ist, durch eine Analyse der zugeführten gefilterten Signale das Objekt (4, 6) zu erkennen,

   - wobei das Filtergerät (100) eine Mittelungseinheit (14) aufweist, die eingerichtet ist, den Verlauf der Amplituden der erfassten Signale über der Zeit zu mitteln,
   - wobei das Filtergerät eine nichtlineare Filtereinheit (24) aufweist, die basierend auf einem linearen Tiefpassfilter mit einer variablen Zeitkonstante (32) vorgesehen ist und eingerichtet ist, die erfassten Signale zu filtern,
   - wobei die Objekterkennungsvorrichtung dazu eingerichtet ist, zur Analyse und Erkennung des Objektes (4, 6) ein Wertverlauf entsprechend der mittels einer Komponente (16) bestimmten Differenz des gemittelten Amplitudenverlaufs über die Zeit und der gefilterten Signale dem Analysegerät zuzuführen, und
   - wobei die Objekterkennungsvorrichtung dazu eingerichtet ist, basierend auf der mittels einer Abweichungsberechnungskomponente (18) bestimmten Abweichung der gefilterten Signale und der erfassten Signale und basierend auf dem gemittelten Amplitudenverlauf die variable Zeitkonstante (32) festzulegen.

2. Objekterkennungsvorrichtung nach Anspruch 1, **dadurch gekennzeichnet, dass** die Objekterkennungsvorrichtung dazu eingerichtet ist, mit einer quadratischen Abweichung zwischen den gefilterten Signalen und den erfassten Signalen, einer vorgegebenen minimalen Zeitkonstante, einer vorgegebenen maximalen Zeitkonstante, einer vorgegebenen Toleranzbreite und einer Steigung, die den Übergang zwischen der vorgegebenen minimalen Zeitkonstante und der vorgegebenen maximalen Zeitkonstante bestimmt, die variable Zeitkonstante (32) festzulegen.

3. Objekterkennungsvorrichtung nach Anspruch 1 oder 2, **dadurch gekennzeichnet, dass** die Steigung proportional dem Kehrwert des Quadrats des im gemittelten Amplitudenverlauf vorgesehenen Amplitudenwerts entspricht.

4. Objekterkennungsvorrichtung nach einem der vorhergehenden Ansprüche, **dadurch gekennzeichnet, dass** die Objekterkennungsvorrichtung dazu eingerichtet ist, die variable Zeitkonstante (32) als die vorgegebene maximale Zeitkonstante festzulegen, wenn eine quadratische Abweichung zwischen den gefilterten Signalen und den erfassten Signalen innerhalb der vorgegebenen Toleranzbreite befindet.

5. Objekterkennungsvorrichtung nach einem der vorhergehenden Ansprüche, **dadurch gekennzeichnet, dass** der Sensor dazu eingerichtet ist, die Signale von dem Objekt (4, 6), das vom Sensor 0,1 bis 20 m entfernt ist, insbesondere 1 bis 6 m entfernt ist, zu erfassen.

6. Objekterkennungsvorrichtung nach einem der vorhergehenden Ansprüche, **dadurch gekennzeichnet, dass** zur Bestimmung der Art und Beschaffenheit des Objektes (4, 6) ein weiterer Sensor dazu eingerichtet ist, optische Signale zu erfassen.

7. Verfahren zur Erkennung eines Objektes (4, 6) für Fahrzeuge (2) mit den Schritten:

   - Erfassen von Signalen aus mindestens einer Ultraschalldetektionssequenz von einem zu erkennenden Objekt (4, 6) mit einem Ultraschallsensor;
   - Filtern der erfassten Signale mit einem Filtergerät (100);
   - Zuführen der gefilterten Signale zu einem Analysegerät;
   - Analysieren der zugeführten gefilterten Signale mit dem Analysegerät; und
   - Erkennen des Objektes mit dem Analysegerät,
   - wobei das Filtergerät (100) eine Mittelungseinheit (14) aufweist, die den Verlauf der Amplituden der erfassten Signale über der Zeit mittelt,
   - wobei das Filtergerät (100) eine nichtlineare Filtereinheit (24) aufweist, die basierend auf einem linearen Tiefpassfilter mit einer variablen Zeitkonstante (32) vorgesehen ist und die erfassten Signale filtert,
   - wobei zur Analyse und Erkennung des Objektes ein Wertverlauf entsprechend der Differenz des gemittelten Amplitudenverlaufs und der gefilterten Signale dem Analysegerät zugeführt wird, und
   - wobei basierend auf der Abweichung der gefilterten Signale und der erfassten Signale und basierend auf dem gemittelten Amplitudenverlauf die variable Zeitkonstante festgelegt wird.

8. Verfahren nach Anspruch 7, **dadurch gekennzeichnet, dass** der Wertverlauf entsprechend der Differenz des gemittelten Amplitudenverlaufs über der Zeit und der gefilterten Signale derart verarbeitet wird, dass die negativen Differenzwerte vernachlässigt werden.

## Claims

1. Object recognition apparatus for vehicles (2), having at least one sensor in the form of an ultrasonic sensor, a filter device (100), wherein the sensor and the filter device (100) can be arranged in a common housing, and an analysis device, wherein the sensor is configured to capture signals from at least one ultrasonic detection sequence from an object (4, 6) to be recognized, wherein the filter device (100) is configured to filter the captured signals and to then supply them to the analysis device, and wherein the analysis device is configured to recognize the object (4, 6) by analysing the supplied filtered signals,

   - wherein the filter device (100) has an averaging unit (14) which is configured to average the profile of the amplitudes of the captured signals over time,
   - wherein the filter device has a non-linear filter unit (24) which is provided on the basis of a linear low-pass filter with a variable time constant (32) and is configured to filter the captured signals,
   - wherein the object recognition apparatus is configured, in order to analyse and recognize the object (4, 6), to supply a value profile corresponding to the difference between the averaged amplitude profile over time and the filtered signals, as determined by means of a component (16), to the analysis device, and
   - wherein the object recognition apparatus is configured to set the variable time constant (32) on the basis of the deviation between the filtered signals and the captured signals, as determined by means of a deviation calculation component (18), and on the basis of the averaged amplitude profile.

2. Object recognition apparatus according to Claim 1, **characterized in that** the object recognition apparatus is configured to set the variable time constant (32) using a squared deviation between the filtered signals and the captured signals, a predefined minimum time constant, a predefined maximum time constant, a predefined tolerance range and a slope which determines the transition between the predefined minimum time constant and the predefined maximum time constant.

3. Object recognition apparatus according to Claim 1 or 2, **characterized in that** the slope is proportional to the reciprocal value of the square of the amplitude value provided in the averaged amplitude profile.

4. Object recognition apparatus according to one of the preceding claims, **characterized in that** the object recognition apparatus is configured to set the variable time constant (32) as the predefined maximum time constant if a squared deviation between the filtered signals and the captured signals is within the predefined tolerance range.

5. Object recognition apparatus according to one of the preceding claims, **characterized in that** the sensor is configured to capture the signals from the object (4, 6) which is 0.1 to 20 m, in particular 1 to 6 m, away from the sensor.

6. Object recognition apparatus according to one of the preceding claims, **characterized in that**, in order to determine the type and nature of the object (4, 6), a further sensor is configured to capture optical signals.

7. Method for recognizing an object (4, 6) for vehicles (2), having the steps of:

   - using an ultrasonic sensor to capture signals from at least one ultrasonic detection sequence from an object (4, 6) to be recognized;
   - using a filter device (100) to filter the captured signals;
   - supplying the filtered signals to an analysis device;
   - using the analysis device to analyse the supplied filtered signals; and
   - using the analysis device to recognize the object,
   - wherein the filter device (100) has an averaging unit (14) which averages the profile of the amplitudes of the captured signals over time,
   - wherein the filter device (100) has a non-linear filter unit (24) which is provided on the basis of a linear low-pass filter with a variable time constant (32) and filters the captured signals,
   - wherein, in order to analyse and recognize the object, a value profile corresponding to the difference between the averaged amplitude profile and the filtered signals is supplied to the analysis device, and
   - wherein the variable time constant is set on the basis of the deviation between the filtered signals and the captured signals and on the basis of the averaged amplitude profile.

8. Method according to Claim 7, **characterized in that** the value profile corresponding to the difference between the averaged amplitude profile over time and the filtered signals is processed in such a manner that the negative difference values are ignored.

**Revendications**

1. Dispositif de reconnaissance d'objet pour des véhicules (2), comprenant au moins un capteur configuré comme un capteur à ultrasons, un appareil de filtrage (100), le capteur et l'appareil de filtrage (100) pouvant être disposés dans un boîtier commun, et un appareil d'analyse, dans lequel le capteur est conçu pour détecter des signaux d'au moins une séquence de détection d'ultrasons d'un objet à reconnaître (4, 6), dans lequel l'appareil de filtrage (100) est conçu pour filtrer les signaux détectés et pour les amener ensuite à l'appareil d'analyse, et dans lequel l'appareil d'analyse est conçu pour reconnaître l'objet (4, 6) par une analyse des signaux filtrés amenés,

   - dans lequel l'appareil de filtrage (100) présente une unité de calcul de moyenne (14) qui est conçue pour calculer la moyenne dans le temps de la variation des amplitudes des signaux détectés,
   - dans lequel l'appareil de filtrage présente une unité de filtrage non linéaire (24) qui est prévue avec une constante de temps variable (32) sur la base d'un filtre passe-bas linéaire, et qui est conçue pour filtrer les signaux détectés,
   - dans lequel, pour l'analyse et la reconnaissance de l'objet (4, 6), le dispositif de reconnaissance d'objet est conçu pour amener à l'appareil d'analyse une variation de valeur conformément à la différence, déterminée au moyen d'une composant (16), de la variation d'amplitude moyennée dans le temps et des signaux filtrés, et
   - dans lequel le dispositif de reconnaissance d'objet est conçu pour définir la constante de temps variable (32) sur la base de l'écart des signaux filtrés, déterminé au moyen d'un composant de calcul d'écart (18), et des signaux détectés, et sur la base de la variation d'amplitude moyennée.

2. Dispositif de reconnaissance d'objet selon la revendication 1, **caractérisé en ce que** le dispositif de reconnaissance d'objet est conçu pour définir la constante de temps variable (32) à l'aide d'un écart quadratique entre les signaux filtrés et les signaux détectés, d'une constante de temps minimale prédéfinie, d'une constante de temps maximale prédéfinie, d'une marge de tolérance prédéfinie et d'une pente qui détermine la transition entre la constante de temps minimale prédéfinie et la constante de temps maximale prédéfinie.

3. Dispositif de reconnaissance d'objet selon la revendication 1 ou 2, **caractérisé en ce que** la pente correspond proportionnellement à la valeur réciproque du carré de la valeur d'amplitude prévue dans la variation d'amplitude moyennée.

**4.** Dispositif de reconnaissance d'objet selon l'une quelconque des revendications précédentes, **caractérisé en ce que** le dispositif de reconnaissance d'objet est conçu pour définir la constante de temps variable (32) comme la constante de temps maximale prédéfinie lorsqu'un écart quadratique entre les signaux filtrés et les signaux détectés se troue dans la marge de tolérance prédéfinie.

**5.** Dispositif de reconnaissance d'objet selon l'une quelconque des revendications précédentes, **caractérisé en ce que** le capteur est conçu pour détecter les signaux de l'objet (4, 6) qui se trouve à une distance de 0,1 à 20 m du capteur, en particulier de 1 à 6 m.

**6.** Dispositif de reconnaissance d'objet selon l'une quelconque des revendications précédentes, **caractérisé en ce que** pour la détermination du type et de la nature de l'objet (4, 6), un autre capteur est conçu pour détecter des signaux optiques.

**7.** Procédé permettant de reconnaître un objet (4, 6) pour des véhicules (2), comprenant les étapes consistant à :

- détecter à l'aide d'un capteur à ultrasons des signaux d'au moins une séquence de détection d'ultrasons d'un objet à reconnaître (4, 6) ;
- filtrer les signaux détectés à l'aide d'un appareil de filtrage (100) ;
- amener les signaux filtrés à un appareil d'analyse ;
- analyser les signaux filtrés amenés à l'aide de l'appareil d'analyse ; et
- reconnaître l'objet à l'aide de l'appareil d'analyse,
- dans lequel l'appareil de filtrage (100) présente une unité de calcul de moyenne (14) qui calcule la moyenne de la variation des amplitudes des signaux détectés dans le temps,
- dans lequel l'appareil de filtrage (100) présente une unité de filtrage non linéaire (24) qui est prévue avec une constante de temps variable (32) sur la base d'un filtre passe-bas linéaire, et qui filtre les signaux détectés,
- dans lequel, pour l'analyse et la reconnaissance de l'objet, une variation de valeur conformément à la différence de la variation d'amplitude moyennée et des signaux filtrés est amenée à l'appareil d'analyse, et
- dans lequel la constante de temps variable est définie sur la base de l'écart des signaux filtrés et des signaux détectés et sur la base de la variation d'amplitude moyennée.

**8.** Procédé selon la revendication 7, **caractérisé en ce que** la variation de valeur correspondant à la différence de la variation d'amplitude moyennée dans le temps et des signaux filtrés est traitée de telle sorte que les valeurs de différence négatives sont ignorées.

**FIG. 1**

EP 3 899 578 B1

**FIG. 2**

EP 3 899 578 B1

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2322952 A3
- DE 102013200434 A1
- DE 102008041894 A1